# EUROPÄISCHE PATENTANMELDUNG

(11) **EP 1 754 641 A2**
(43) Veröffentlichungstag der Anmeldung: **21.02.2007**
(21) Anmeldenummer: 06013912.8
(22) Anmeldetag: 05.07.2006
(51) Int. Cl.: B60T 11/16

(54) **Anordnung zur Kupplungsbetätigung**

(30) Priorität: 20.08.2005 DE 102005039388
(71) Anmelder: LuK Lamellen und Kupplungsbau Beteiligungs KG, 77815 Bühl (DE)
(72) Erfinder: Rammhofer, Thomas, 77880 Sasbach (DE); Grabenstätter, Jan, 76593 Gernsbach (DE)

(57) **Zusammenfassung**

Die vorliegende Erfindung betrifft eine Anordnung zur Kupplungsbetätigung, mit der einerseits unter Beibehaltung der Funktionen von Geberzylinder (2) und Pedal (1), die Anzahl der Bauteile für die Anordnung zur Kupplungsbetätigung und damit das Gewicht und die Kosten reduziert werden, und die andererseits unabhängig vom Fahrzeugtyp einsetzbar ist. Dazu ist in das Pedal das bewegbare Bauteil des Geberzylinders, der Kolben, und in den Pedalbock (15) das feststehende Bauteil, das Gehäuse des Geberzylinders integriert bzw. jeweils mit diesen fest verbunden, und das bewegbare Bauteil (16) wird mit einem Radius (r) um den Drehpunkt (23) des Pedals dreh- bzw. schwenkbar im feststehenden Bauteil (17) geführt.

## Beschreibung

Die vorliegende Erfindung betrifft eine Anordnung zur Kupplungsbetätigung umfassend einen Geberzylinder mit einem in einem Gehäuse geführten Kolben sowie einem Pedal zur Betätigung einer Fahrzeugkupplung.

Ausrücksysteme zur Betätigung von Kupplungen sowie Bremsanlagen in Kraftfahrzeugen umfassen in der Regel ein hydraulisches System, welches mittels eines Geberzylinders, der zum Beispiel über ein Schubmittelgetriebe mit einem Pedal verbunden ist, betätigt werden kann. Aus der WO 87/03344 ist eine Kombination eines derartigen Geberzylinders mit einem Betätigungspedal bekannt. Der Geberzylinder ist in den Hebel des Fußpedals integriert und wird bei Betätigung des Fußpedals entlang einer Kurvenscheibe bewegt und entsprechend der Geometrie der Kurvenscheibe eingedrückt. Nachteilig an der Kombination von Kupplungspedal und Geberzylinder gemäß dem Stand der Technik ist die hohe Anzahl beweglicher Teile.

Aufgabe der vorliegenden Erfindung ist es daher, unter Beibehaltung der Funktionen von Geberzylinder und Pedal, die Anzahl der Bauteile für die Anordnung zur Kupplungsbetätigung und damit das Gewicht und die Kosten zu reduzieren, sowie eine Kupplungsbetätigungsanordnung zu schaffen, die unabhängig vom Fahrzeugtyp einsetzbar ist.

Dieses Problem wird gelöst mit Hilfe einer Anordnung umfassend einen Geberzylinder mit einem Gehäuse als feststehendem Bauteil und einem darin geführten Kolben als bewegbarem Bauteil, sowie einem Pedal, das dreh- bzw. schwenkbar um einen Drehpunkt und an einem Pedalbock angeordnet ist, indem das im Pedal das bewegbare Bauteil, und im Pedalbock das feststehende Bauteil des Geberzylinders integriert bzw. jeweils mit diesen fest verbunden ist, und das bewegbare Bauteil mit einem Radius um den Drehpunkt des Pedals dreh- bzw. schwenkbar in dem feststehenden Bauteil geführt wird.

Unter "fester Verbindung" soll verstanden werden, dass beispielsweise kein Schubmittelgetriebe, keine Kurvenscheibe oder dergleichen zwischen Kolben und Pedal vorgesehen ist. Die feste Verbindung kann zum Beispiel dadurch hergestellt werden, dass der Kolben fest mit dem Pedal verschraubt, verschweißt oder verklebt ist oder indem Pedal und Kolben unmittelbar einstückig, beispielsweise als Kunststoffteil, gefertigt sind. Durch die Integration des Kolbens des Geberzylinders direkt in die Pedalanlage ergibt sich eine Baugruppe, die als "Patrone" in den im Fahrgastraum angeordneten Pedalbock des jeweiligen Fahrzeuges geschoben werden kann. Besonders vorteilhaft ist, aufgrund der Integration des Geberzylinders in das Kupplungspedal, der reduzierte Bauraumbedarf für den Kupplungsgeberzylinder. Außerdem wird die Temperaturbeanspruchung des Geberzylinders reduziert, da dieser im relativ kühlen Fahrgastraum angeordnet ist. Durch die Eingliederung des Geberzylinders in eine bereist bestehende Komponente, nämlich der Pedalbox, können zudem Gehäusebauteile eingespart werden. Dadurch, dass die Bauelemente für die Umsetzung einer Schwenk- bzw. Drehbewegung in eine translatorische Bewegung entfallen, wird eine Einsparung von Teilen erzielt, wodurch einerseits eine Geräuschminderung in der hydraulischen Strecke zur Kupplungsbetätigung und andererseits das Gewicht für die Anordnung herabgesetzt werden. Außerdem werden dadurch die Herstellungskosten gesenkt.

Vorzugsweise ist vorgesehen, dass der Kolben und der Zylinder entlang ihrer Längsachse kreisförmig gebogen sind. Dabei sind der Kolben und der Zylinder vorzugsweise um einen gemeinsamen Mittelpunkt kreisförmig gebogen. Dadurch wird die Schwenkbewegung des Pedals unmittelbar auf den Kolben übertragen, der dadurch eine rotatorische Bewegung ausführen kann. Auf dies Weise entfällt die Übersetzung von der Schwenk- bzw. Drehbewegung des Pedals in eine translatorische Bewegung der Kolbenstange und damit des Kolbens, die zum Beispiel mit Hilfe eines Schubmittelgetriebes zwischen Pedal und Kolbenstange realisiert werden kann. Die Ausbildung des Geberzylinders mit einer kreisförmig gebogenen Form hat weiterhin den Vorteil, dass keine Querkräfte des Kolbens auf das Gehäuse des Geberzylinders übertragen werden.

Bei einer Anordnung, bei der der Kolben als Hohlkolben ausgebildet ist, handelt sich bei um eine geometrische Umkehr. Die Wirkungsweise ist jedoch identisch. Durch die unterschiedlichen Ausführungen des Gehäuses des Geberzylinders bzw. dessen Kolbens im Zusammenhang mit dem Pedal, können unterschiedliche Bauraumgegebenheiten in einem Fahrzeug abgedeckt werden.

In einer weiteren vorteilhaften Ausgestaltung der erfindungsgemäßen Lösung ist vorgesehen, dass in dem feststehenden Teil, der das Gehäuse des Geberzylinders definiert, eine Bohrung für den Zufluss zu einem Nachlaufbehälter sowie eine Druckabgangsbohrung vorgesehen sind. Somit können Schlauchleitungen eingespart werden, die ansonsten zwischen dem beweglichen Pedal und der Karosserie verlegt und dabei entsprechend auf Zug, Knickung und dergleichen beansprucht werden.

Das eingangs genannte Problem wird auch gelöst durch einen Geberzylinder für ein hydraulisches System mit einem Kolben und einem Gehäuse, wobei Kolben und Gehäuse entlang ihrer Längsachse gebogen sind. Vorzugsweise ist dabei vorgesehen, dass Kolben und Gehäuse um einen Mittelpunkt kreisförmig gebogen sind. Der Kolben dieses Geberzylinders ist dabei mit dem Pedal und das Gehäuse mit dem Pedalbock fest verbunden, wobei die Verbindung auch lösbar gestaltet werden kann, bzw. auf diesen Bauteilen entsprechend angeordnet, sodass das Pedal mit dem beweglichen Teil des Geberzylinders als Baugruppe an den Pedalbock angeschlossen werden kann.

Die Erfindung wird nachfolgend anhand von Ausführungsbeispielen und zugehöriger Zeichnungen näher erläutert.

Dabei zeigen:
- Fig. 1: eine schematische Darstellung einer hydraulischen Strecke für eine Kupplungsbetätigung;
- Fig. 2: ein erstes Ausführungsbeispiel einer erfindungsgemäßen Anordnung zur Kupplungsbetätigung; bei der das Gehäuse des Geberzylinders mit dem Pedalbock des Kupplungspedals fest verbunden bzw. in diesen integriert ist,
- Fig. 3: ein zweites Ausführungsbeispiel einer erfindungsgemäßen Anordnung zur Kupplungsbetätigung; bei der das Gehäuse des Geberzylinders in das Kupplungspedal integriert ist.

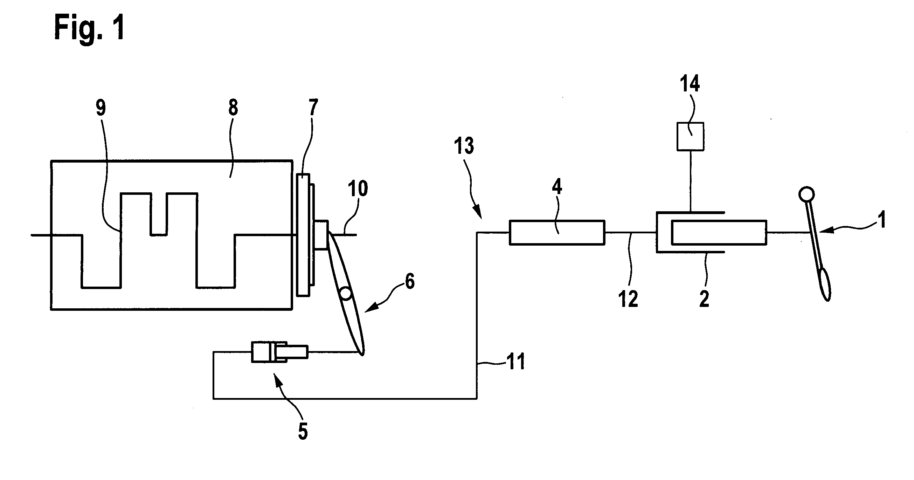

Fig. 1 zeigt in schematischer Darstellung eine mögliche Ausgestaltung einer hydraulischen Strecke für eine Kupplungsbetätigung mit einer Ausrückvorrichtung 6, einem Geberzylinder 2 und einem Nehmerzylinder 5. Über Druckleitungen sind die Bauteile jeweils miteinander verbunden. In diesem Ausführungsbeispiel dient eine Steckverbindung 4 dazu, einen ersten Leitungsstrangs 11 einer Druckleitung 13 mit deren zweiten Leitungsstrang 12 zu verbinden. Selbstverständlich kann die Steckverbindung 4 ebenso direkt an dem Geberzylinder 2 oder dem Nehmerzylinder 5 angeordnet sein. Des Weiteren kann in die Steckverbindung 4 gleichzeitig die Funktion eines Schwingungsdämpfers, integriert sein. Der Geberzylinder ist mit einem Nachlaufbehälter 14 verbunden, der im drucklosen Zustand des hydraulischen Systems dieses mit Hydraulikfluid versorgt, um so ausgetretenes oder anderweitig verbrauchtes Hydraulikfluid wieder zu ersetzen.

Die mit dem Nehmerzylinder 5 in Verbindung stehende Ausrückvorrichtung 6 betätigt die Kupplung 7 hydraulisch dadurch, dass das Hydraulikfluid im Geberzylinder 2 von einer Betätigungseinrichtung, in diesem Fall von dem Pedal 1, über eine mechanischen Übertragung 3 mit Druck beaufschlagt wird. Dieser im Geberzylinder 2 aufgebaute Druck wird über die den zweiten Leitungsstrang 12, die Steckverbindung 4 und den ersten Leitungsstrang 11 der Druckleitung 13 an den Nehmerzylinder 5 weiter gegeben. Vom Nehmerzylinder 5 wird die Ausrückkraft an die Ausrückvorrichtung 6 übergeben und damit die Tellerfeder der Kupplung 7 betätigt, die dadurch entweder zur Drehmomentübertragung mit einem Antriebsstrang verbunden oder von diesem getrennt werden kann. Eine Getriebeeingangswelle 10 überträgt bei geschlossener Kupplung 7 das Drehmoment der Brennkraftmaschine 8 auf ein nicht näher dargestelltes Getriebe 9 und anschließend auf die Antriebsräder eines Kraftfahrzeuges.

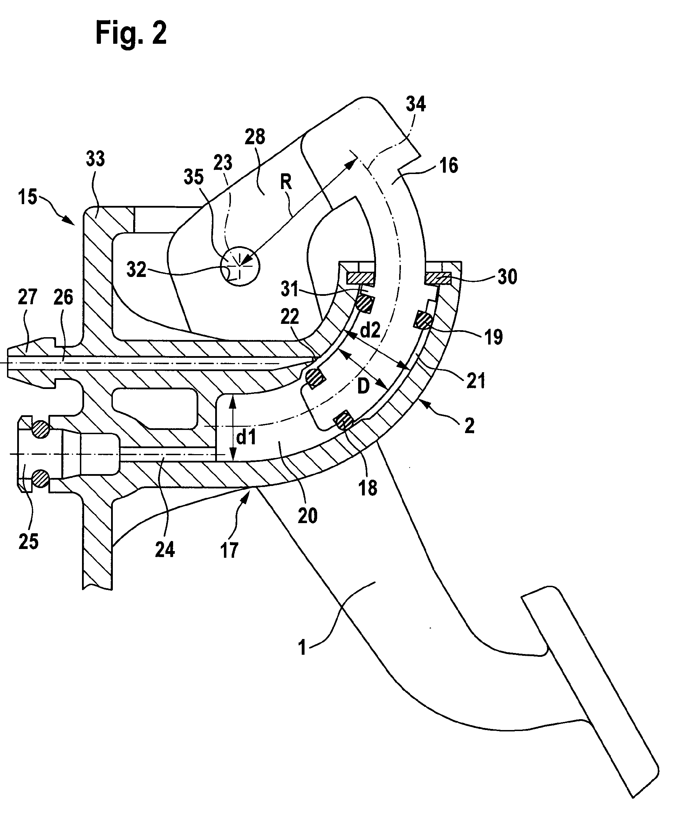

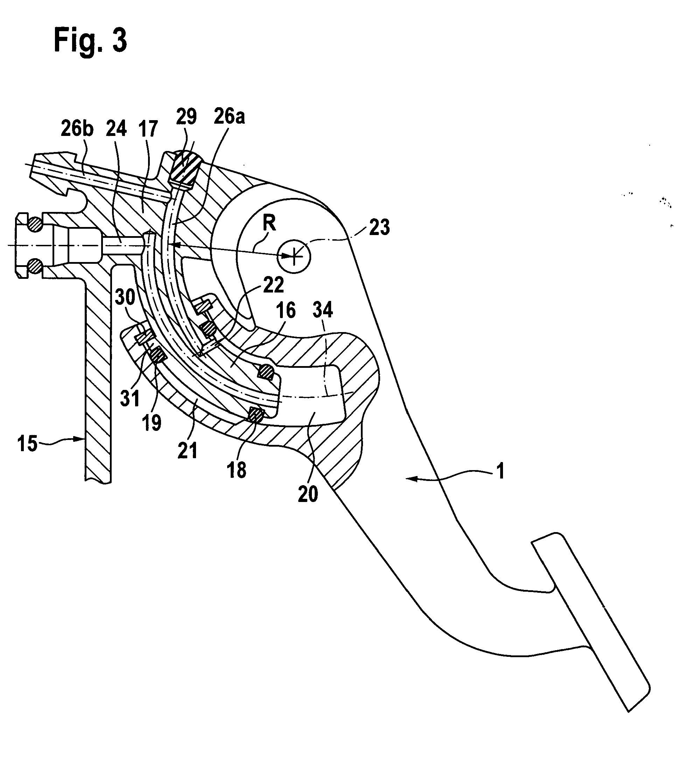

Für die Betrachtungsweise der nachfolgenden Figuren 2 und 3 wird davon ausgegangen, dass jeweils das bewegbare Bauteil als Kolben 16 und das feststehende Bauteil als Zylinder bzw. Gehäuse 17 definiert ist.

Fig. 2 zeigt ein erstes Ausführungsbeispiel einer erfindungsgemäßen Anordnung zur Kupplungsbetätigung. Dabei ist der Geberzylinder 2 in einen Pedalbock 15 integriert. Der Pedalbock 15 wird beispielsweise in einer nicht dargestellten Wand oder einem Schott eines Kraftfahrzeuges im Fußraum des Fahrerplatzes angeordnet und dient üblicher Weise als Halterung für das Pedal 1. In dem Pedalbock 15 bzw. dem in diesem integrierten Gehäuse 17 wird ein mit dem Pedal 1 fest verbundener Kolben 16 geführt, der in diesem Gehäuse 17 einen Druckraum 20 begrenzt. Im Bereich zwischen einer Primär- und einer Sekundärdichtung wurde der Innendurchmesser des Gehäuses 17 gegenüber dem Außendurchmesser des Kolbens 16 so gewählt, dass ein sich als Nachlaufraum 21 bezeichneter Raum bildet, der mit Hydraulikfluid ausgefüllt ist. Die Primärdichtung 18 und die Sekundärdichtung 19 dichten den Druckraum 20 gegenüber dem Nachlaufraum 21 ab. Eine am Ende der Bohrung 26 vorgesehene Schnüffelnut 22 verbindet bei vollständig entlastetem Geberzylinder 2 den Nachlaufraum 21 mit dem Druckraum 20.

Der Kolben 16 ist ebenso wie das Gehäuse 17 entlang ihrer gemeinsamen Längsachse 34 vorzugsweise kreisförmig gebogen und beschreibt bei Betätigung des Kupplungspedals 1 um einen Drehpunkt 23 einen Teil eines Kreisbogens im Gehäuse 17. Der Drehpunkt 23 des Pedals 1 ist somit der Kreismittelpunkt sowohl für die Kreisbahn bzw. Längsachse des Kolbens 16 als auch für die Längsachse des Gehäuses 17. Der Krümmungsradius R ist also für Kolben 16 und Gehäuse 17 gleich groß.

Wie bereits oben erwähnt, besitzt das Gehäuse 17 einen ersten Bereich mit einem geringeren Innendurchmesser d1 und zwischen dem Bereich, der dem Bereich entspricht, wo am Kolben 16 die Primär- und Sekundärdichtung angeordnet sind, einen größeren Innendurchmesser d2 als dem zuvor genannten Innendurchmesser d1; d2 > d1. Der Außendurchmesser D dagegen des Kolbens 16 ist etwas geringer als der Innendurchmesser d1 des Gehäuses 17, um somit den Nachlaufraum 21 zu definieren. Die Längen der Bereiche mit den Innendurchmessern d1 und d2 sowie die Anordnungen von Primärdichtung 18 und Sekundärdichtung 19 an dem Kolben 16 sind so gewählt, dass die Primärdichtung 18 über den gesamten Betätigungsweg des Pedals 1 den Raum mit dem kleineren Innendurchmessers d1 abdichtet. In Fig. 2 ist das Pedal 1 in vollständig entlasteter Stellung und damit die Endstellung des Kolbens 16 dargestellt. Beim Übergang des Kolbens 16 vom kleineren Innendurchmesser d1 zum größeren Innendurchmesser d2 hat dieser die Schnüffelnut 22 freigegeben. Die Sekundärdichtung 19 befindet sich, unabhängig von der jeweiligen Stellung des Pedals 1, immer im Bereich des größeren Innendurchmessers d2. Der Kolben 16 kann beispielsweise mittels Verschrauben, Verkleben oder Verschweißen fest mit dem Pedal 1 verbunden sein. Zur Erzeugung eines Abstandes der Längsachse des Kolbens 16 vom Drehpunkt 23, der dem Radius R der Längsachse des Gehäuses 17 entspricht, ist das Pedal 1 so konstruktiv ausgebildet, dass dieser Abstand bzw. der Radius R über einen Arm 28 realisiert wird. Der Kolben 16 kann allerdings alternativ statt an einem Arm 28 auch unmittelbar in geeignetem Abstand zum Drehpunkt 23 am Pedal 1 angeordnet sein. Der Kolben 16 kann aus Metall, Kunststoff oder einem Verbundmaterial, beispielsweise glasfaser- oder kohlefaserverstärktem Kunststoff oder einer Kombination aus den aufgeführten Materialien bestehen. Das Pedal 1 kann aus einem beliebigen Material bestehen.

Das Pedal 1 ist, wie bereits erwähnt, um den Drehpunkt 23 gelagert. Bei Betätigung des Pedals 1 wird der Kolben 16 in das Gehäuse 17 geschoben, so dass sich der Druckraum 20 entsprechend verkleinert und das Hydraulikfluid mittels einer im Gehäuse 17 vorgesehener Druckabgangsbohrung 24 über eine Hydraulikkupplung 25 in einen in Fig. 2 nicht dargestellte zweiten Leitungsstrang 12 einer Druckmediumsleitung 13 weitergeleitet wird. Die im Gehäuse 17 vorgesehene Bohrung 26 steht einerseits mit einem nicht dargestellten Nachlaufbehälter 14 und andererseits über die Schnüffelnut 22 mit dem Nachlaufraum 21 in Verbindung. Das Gehäuse 17 verfügt endseitig im Bereich der Bohrung 26 über ein Schlauchanschlussstück 27 und kann somit über dieses mit einem in Fig. 2 nicht näher dargestellten Schlauch mit dem Nachlaufbehälter 14 verbunden werden.

Der Kolben 16 umfasst einen stufenförmigen Anschlag 31, der in der entlasteten Stellung des Pedals 1 an einen im Gehäuse 17 vorgesehenen Anschlagring 30 anschlägt. Der Anschlagring 30 kann zur Montage mehrteilig ausgebildet sein.

Im Pedal 1 ist zur Ausbildung des Drehpunktes 23 eine Bohrung 32 vorgesehen, in die ein Bolzen 35 aufgenommen wird. Dieser Bolzen 35 ist mit einer Halterung 33 eines Pedalbocks 15 fest verbunden, in den das Gehäuse 17 integriert bzw. mit diesem verbunden ist. Mit Hilfe dieses Bolzens 35 ist das Pedal und damit der Kolben 16 dreh- bzw. schwenkbar um den Drehpunkt 23 gelagert. Das Gehäuse 17 und die weiteren mit diesem fest verbundenen Baugruppen können beispielsweise einstückig als Metall- oder Kunststoffteil, zum Beispiel gegossen sein. Das Gehäuse 17 bildet mit der Halterung 33 den Pedalbock 15, der als Baueinheit in ein Kraftfahrzeug eingebaut werden kann.

Fig. 3 zeigt eine alternative Ausführungsform der erfindungsgemäßen Anordnung. Während bei der Ausführungsform gemäß Fig. 2 das bewegbare Bauteil, der Kolben 16, mit dem Pedal 1 fest verbunden bzw. in dieses integriert ist und in dem feststehenden Bauteil, dem Pedalbock 15 (Gehäuse 17 eines Geberzylinders 2) geführt wird, sind die Bauteile gemäß Figur 3 dazu invers ausgebildet. Das heißt, dass bei dieser Ausführung gemäß Figur 3 der Kolben 16 als Zylinder ausgeführt und fest mit dem Pedal 1 verbunden bzw. in dieses integriert ist und das entsprechend gestaltete Gehäuse der Pedalbock 15 in diesem Kolben 16 auf einem Teil einer Kreisbahn geführt wird.

Sowohl die Druckabgangsbohrung 24 als auch die Bohrung 26, die konstruktiv bedingt in die Teilbereiche 26a und 26b unterteilt ist, sind in dieser Ausführung durch das Gehäuse 17 geführt. Der erste Teil 26a der Schnüffelbohrung 26 wird von einem Stopfen 29 verschlossen. Der Stopfen 29 kann eingeschraubt oder verklebt sein und dient dazu, beim Gießen bzw. Spritzgießen dieses Kunststoffteils den Kern entnehmen zu können.

Ebenfalls wie in Figur 2 sind die Durchmesser von Kolben 16 und Gehäuse 17 im Bereich zwischen der Primärdichtung 18 und der Sekundärdichtung 19 so gewählt, dass ein Nachlaufraum 21 gebildet wird, über den Hydraulikfluid aus einem Nachlaufbehälter 14 über eine Schnüffelnut 22 in den Druckraum 20 nachließen kann, um mögliche Mengenverluste von Hydraulikfluid aus einem Nachlaufbehälter 14 auffüllen zu können. Die am Kolben 16 angeordnete Primär- und Sekundärdichtung dient ebenfalls wie in Figur 2 beschrieben, zur Abdichtung des Druckraums 20 gegenüber der Umgebung. Zur Begrenzung des Weges des Pedals 1 bzw. des Weges des Kolbens 16 ist auch in dieser Ausführung ein stufenförmig ausgebildeter Anschlag 31 am Gehäuse 17 vorgesehen, der mit einem endseitig im Druckraum 20 angebrachten Anschlagring 30 zusammenwirkt.

Das Gehäuse 17 besitzt weiterhin endseitig einen Anschluss für die Druckleitung 13 und einen Anschluss an den Nachlaufbehälter 14, die in dieser Figur 3 nicht dargestellt sind.

### Bezugszeichenliste

- 1: Pedal
- 2: Geberzylinder
- 3: Mechanische Übertragung
- 4: Steckverbindung
- 5: Nehmerzylinder
- 6: Ausrückvorrichtung
- 7: Kupplung
- 8: Brennkraftmaschine
- 9: Getriebe
- 10: Getriebeeingangswelle
- 11: erster Leitungsstrang
- 12: zweiter Leitungsstrang
- 13: Druckmediumsleitung / Druckleitung
- 14: Nachlaufbehälter
- 15: Pedalbock
- 16: Kolben / bewegbares Bauteil
- 17: Gehäuse / feststehendes Bauteil
- 18: Primärdichtung
- 19: Sekundärdichtung
- 20: Druckraum
- 21: Nachlaufraum
- 22: Schnüffelnut
- 23: Drehpunkt
- 24: Druckabgangsbohrung
- 25: Hydraulikkupplung
- 26: Bohrung
- 26a, 26b: Teilbereiche von 26
- 27: Schlauchanschlussstück
- 28: Arm
- 29: Stopfen
- 30: Anschlagring
- 31: Anschlag
- 32: Bohrung
- 33: Halterung
- 34: Längsachse
- 35: Bolzen
- d1: Innendurchmesser
- d2: Innendurchmesser
- D: Außendurchmesser
- R: Krümmungsradius

## Patentansprüche

1. Anordnung zur Kupplungsbetätigung umfassend einen Geberzylinder (2) mit einem in einem Gehäuse als feststehendem Bauteil (17) und einem darin geführten Kolben als bewegbarem Bauteil (16), sowie einem Pedal (1), das dreh- bzw. schwenkbar um einen Drehpunkt (23) und an einem Pedalbock (15) angeordnet ist, **dadurch gekennzeichnet, dass** im Pedal (1) das bewegbare Bauteil (16), und im Pedalbock (15) das feststehende Bauteil (17) des Geberzylinders (2) integriert bzw. jeweils mit diesen fest verbunden ist, und das bewegbare Bauteil (16) mit einem Radius (r) um den Drehpunkt (23) des Pedals (1) dreh- bzw. schwenkbar in dem feststehenden Bauteil (17) geführt wird.

2. Anordnung nach Anspruch 1, **dadurch gekennzeichnet, dass** der Kolben (16) und das Gehäuse (17) entlang einer gemeinsamen Längsachse (34) gebogen sind.

3. Anordnung nach Anspruch 1 und 2, **dadurch gekennzeichnet, dass** die Längsachse (34) eine Kreisbahn beschreibt und mit einem Radius (r) vom Drehpunkt (23) beabstandet ist.

4. Anordnung nach Anspruch 1, **dadurch gekennzeichnet, dass** im Gehäuse (17) eine Bohrung (26, 26a, 26b) zur Verbindung zu einem Nachlaufbehälter (14) und eine Druckabgangsbohrung (24) vorgesehen sind.

5. Geberzylinder (2) nach Anspruch 1, **dadurch gekennzeichnet, dass** das Gehäuse (17) und der darin geführte Kolben (16) als Rotationskörper ausgebildet und um einen gemeinsamen Mittelpunkt, dem Drehpunkt (23), kreisförmig gebogen sind.
